## Europäisches Patentamt

## European Patent Office

## Office européen des brevets

(19)

(11) Numéro de publication: **0 210 103**
**B1**

(12) **FASCICULE DE BREVET EUROPEEN**

(45) Date de publication du fascicule du brevet:
20.12.89

(51) Int. Cl.⁴: **F 01 N 3/28**

(21) Numéro de dépôt: **86401548.2**

(22) Date de dépôt: **10.07.86**

(54) Pot d'échappement pour véhicule automobile ou analogue.

(30) Priorité: **16.07.85 FR 8510900**

(43) Date de publication de la demande:
**28.01.87 Bulletin 87/5**

(45) Mention de la délivrance du brevet:
**20.12.89 Bulletin 89/51**

(84) Etats contractants désignés:
**AT BE CH DE GB IT LI LU NL SE**

(56) Documents cités:
**DE-A- 2 222 663**
**DE-A- 2 248 442**
**DE-A- 2 259 817**
**DE-A- 2 434 102**
**FR-A- 2 225 620**
**FR-A- 2 454 517**
**FR-A- 2 467 975**
**US-A- 4 101 280**

(73) Titulaire: **ECIA - EQUIPEMENTS ET COMPOSANTS POUR L'INDUSTRIE AUTOMOBILE, F-25400 Audincourt (Doubs) (FR)**

(72) Inventeur: **Clerc, Michel, 27, rue des Graviers, F-25700 Valentigney (FR)**

(74) Mandataire: **Moncheny, Michel et al, c/o Cabinet Lavoix 2 Place d'Estienne d'Orves, F-75441 Paris Cedex 09 (FR)**

ACTORUM AG

## Description

La présente invention concerne les pots d'échappement catalytiques qui comportent à l'intérieur d'une enveloppe méttalique délimitant des chambres d'entrée et de sortie des gaz, un corps en matériau céramique, de type nid d'abeille ou analogue, qui assure le traitement des gaz et doit par conséquent être traversé par la totalité de ceux-ci. Or, il est bien connu que la céramique est un matériau extrêmement fragile et il est donc nécessaire de la protéger contre les risques de détérioration dûs aux vibrations subies par le pot d'échappement ou à la dilatation différentielle entre la céramique et son enveloppe.

Dans ce but, le corps en céramique est généralement maintenu à l'intérieur de l'enveloppe par un treillis métallique qui assure sa suspension.

Malheureusement, ces treillis métalliques ne résistent pas aux températures élevées, pouvant atteindre 800 à 1000°C, auxquelles sont portés les gaz d'échappement. Un joint d'étanchéité est donc nécessaire pour isoler le treillis métallique de la chambre d'entrée des gaz. On constate toutefois que ce joint à tendance à se détériorer ce qui entraîne la détérioration du treillis lui-même de sorte que non seulement le maintien du corps en matériau céramique n'est plus assuré mais qu'une partie des gaz d'échappement peut s'écouler autour du corps en matériau céramique dans l'espace qui le sépare de l'enveloppe, c'est-à-dire ne pas être traitée.

Il est également connu d'après le FR-A-2 225 620 de monter autour du corps céramique un matelas de fibres résistantes aux températures élevées, qui est partiellement comprimé et entouré par un revêtement métallique qui l'isole de l'enveloppe du pot d'échappement. Des moyens de retenue sont alors nécessaires pour limiter le déplacement longitudinal du corps. Une telle réalisation est donc complexe et relativement onéreuse.

La présente invention a pour but de remédier à ces inconvénients en fournissant un pot d'échappement catalytique, qui présente une grande sécurité de fonctionnement et notamment de maintien du corps en céramique.

Cette invention a en effet pour objet un pot d'échappement catalytique comprenant au moins un corps en matériau céramique, de type nid d'abeille ou analogue enfermé à l'intérieur d'une enveloppe métallique et délimitant avec celle-ci des chambres d'entrée et de sortie et, autour de chaque corps en céramique, un matelas de fibres très résistantes aux températures élevées, pratiquement dépourvu de liant, exempt d'eau de constitution, et fortement comprimé, caractérisé en ce que l'enveloppe métallique étant formée par deux demi-coquilles assemblées entre elles, le matelas est comprimé dans l'espace entre le corps en céramique et l'enveloppe, délimite avec le corps et l'enveloppe la chambre d'entrée des gaz mais est isolé de la chambre de sortie par un joint d'étanchéité entourant l'extrémité du corps en céramique et comprimé entre lui et l'enveloppe.

La constitution du matelas de fibres de même que sa compression lui permet non seulement d'assurer l'absorption des dilatations différentielles et/ou des vibrations, mais également de former une barrière contre le passage des gaz entre le corps céramique et l'enveloppe, ce qui assure une grande efficacité au pot d'échappement même à des températures très élevées.

Selon une caractéristique de l'invention, le matelas de fibres entoure la totalité du corps en céramique.

Le joint d'étanchéité peut être constitué par un cordon tressé serré de fibres très résistantes aux températures élevées, analogues à celles qui constituent le matelas ou par un matériau thermoexpansible.

Selon une autre forme de réalisation, le matelas est réalisé en deux parties qui ont chacune une longueur proche de celle de l'une des portions de grand diamètre du corps en céramique, et sont espacées l'une de l'autre.

La description ci-dessous de modes de réalisation donnés à titre d'exemples non limitatifs et représentés aux dessins annexés fera d'ailleurs ressortir les avantages et caractéristiques de l'invention. Sur ces dessins:

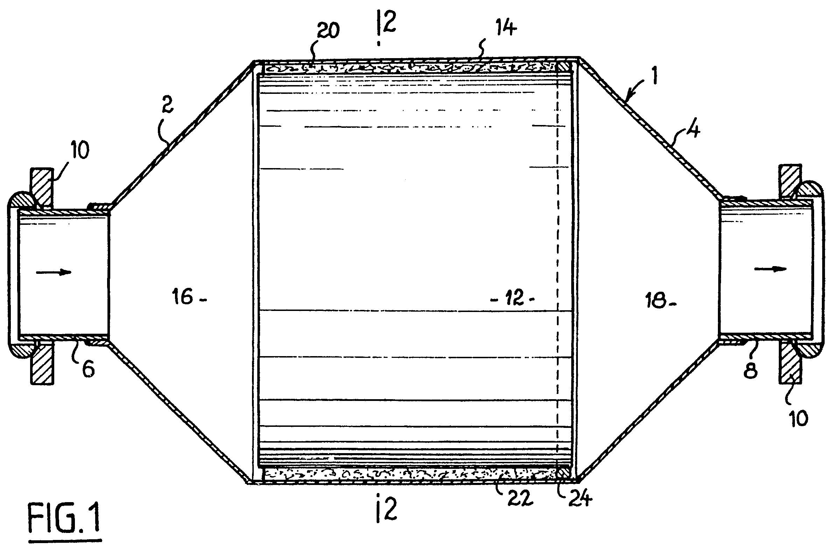

la figure 1 est une vue schématique, en coupe axiale, d'un pot d'échappement selon l'invention;

la figure 2 est une vue en coupe suivant la ligne 2-2 de la figure 1;

la figure 3 est une vue analogue à la figure 2 d'une variante de réalisation.

Le pot d'échappement catalytique représenté comporte de la manière habituelle une enveloppe 1 de section transversale sensiblement elliptique dont les deux extrémités 2 et 4 ont des diamètres progressivement décroissants pour être fixés sur des tubulures 6 et 8 respectivement d'entrée et de sortie des gaz d'échappement. Chacune des tubulures 6 et 8 portant de préférence une bride 10 de fixation sur la tuyauterie.

A l'intérieur de l'enveloppe 1 est monté un corps 12 qui a une section transversale elliptique analogue à celle de la partie centrale 14 de l'enveloppe 1, mais avec des diamètres légèrement inférieurs. Ce corps 12 délimite ainsi avec les parties rétrécies 2 et 4 de l'enveloppe 1, des chambres 16 et 18 respectivement d'entrée et de sortie des gaz. Il met en outre ces chambres 16 et 18 en communication l'une avec l'autre car il comporte de multiples canaux internes par exemple en nid d'abeille.

Entre le corps céramique 12 et l'enveloppe 14 est interposé un matelas de fibres fortement comprimé qui assure la suspension du corps 12. Le matelas 20, 22 est constitué par des fibres dites longues ayant par exemple des diamètres de 2 à 10 µ et présentant une grande résistance aux températures élevées ainsi qu'à la plupart des agents corrosifs en atmosphère oxydante ou réductrice. En outre, le matelas de fibres ne contient qu'une très faible quantité de liant de préférence inférieure à 2% et pratiquement pas d'eau de constitution. Des matelas particulièrement appropriés sont par exemple ceux réalisés à partir de fibres composées à base de magnésie et/ou de chaux et/ou d'alumine et/ou de silice, et notamment la fibre de céramique vendue par la Société Carborandum sous le nom «Fibermax Buck Fiber».

Le matelas est en outre fortement comprimé sous une pression de l'ordre de deux tonnes qui réduit son épaisseur à un quart ou un cinquième de sa valeur initiale.

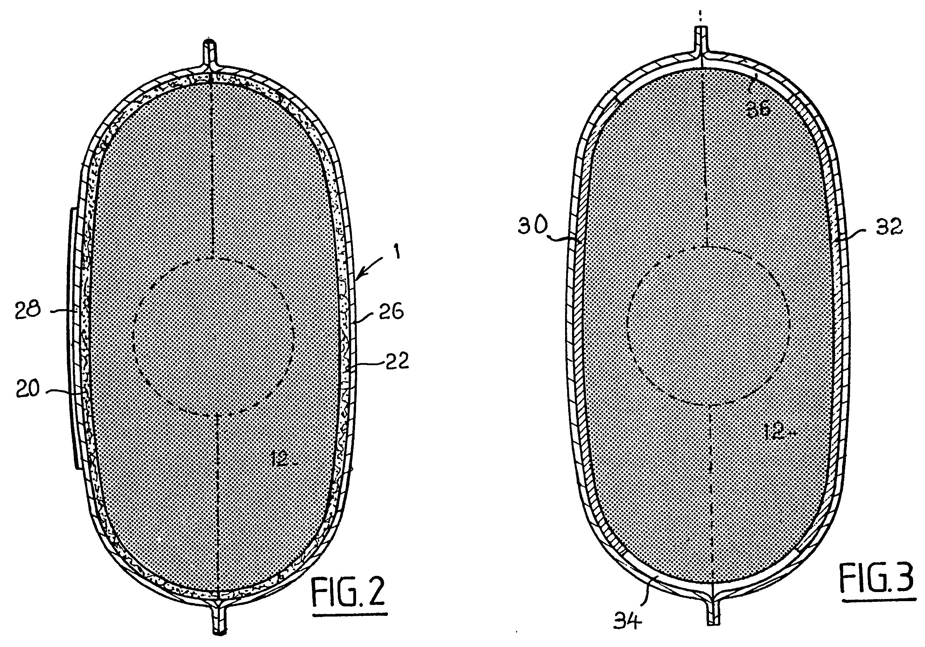

Dans le mode de réalisation représenté sur la figure 2, le matelas est réalisé en deux parties juxtaposées qui recouvrent chacune la moitié de la surface extérieure du corps céramique 12 et sont serrées l'une contre l'autre dans l'enveloppe 1.

Un joint d'étanchéité 24 est par ailleurs monté autour du corps céramique 12 à proximité de la chambre de sortie 18 des gaz d'échappement qu'il sépare du matelas 20, 22. Ce joint peut être réalisé en tous matériaux appropriés, mais il est de préférence constitué par un cordon de fibres tressées serré, formé par des fibres analogues à celles qui constituent le matelas, c'est-à-dire des fibres résistant très bien aux températures élevées et présentant également une grande résistance aux agents corrosifs, ou par une bande de matériau thermoexpansible tel que le papier thermoexpansible commercialisé par la Société Carborandum sur la dénomination «Fiberfrax XPE-3100 Paper». Cette bande est simplement enroulée autour du corps 12, les extrémités étant coupée en tenons et mortaises pour assurer l'étanchéité.

Selon la variante de réalisation représentée sur la figure 3, le matelas est réalisé en deux parties 30 et 32 qui sont espacées et ne recouvrent qu'une partie du corps céramique 12, chacune des parties 30, 32 du matelas s'étendant cependant sur une longueur suffisante pour recouvrir au moins la majeure partie de la surface de grand diamètre du corps 12. Dans le mode de réalisation de la figure 3, chaque partie du matelas s'étend en fait sur la totalité de la surface de grand diamètre de ce corps 12, et même se prolonge sur une portion de la surface de petit diamètre. Un espace 34, 36 est ainsi ménagé en deux points opposées de la section transversale du pot d'échappement entre les deux matelas 30 et 32.

Dans ce mode de réalisation comme dans le précédent, les matelas 30 et 32 sont fortement comprimés et cette compression jointe à la nature des fibres qui les constituent leur permet non seulement de résister à des températures élevées telles que celles des gaz d'échappement pénétrant dans la chambre d'entrée 16 mais également de jouer un rôle de joint d'étanchéité interdisant le passage de ces gaz chaud autour de la céramique 12. Bien entendu, les espaces 34 et 36 laissent passer un flux de gaz mais celui-ci est arrêté de manière extrêmement sure par le joint 24 qui leur interdit la pénétration dans la chambre de sortie 18 et les oblige à traverser la céramique 12.

Les matelas 20 et 22 eux assurent une étanchéité presque totale. Dans tous les cas, les gaz qui atteignent le joint d'étanchéité 24 ont été considérablement refroidis et sont à une température nettement inférieure à celle de la chambre d'entrée 16. Les risques de détérioration de ce joint sont donc extrêmement réduits.

Le pot d'échappement présente donc une excellente tenue à la température, ce qui lui permet d'être utilisé longtemps avec une grande efficacité.

Son montage s'effectue par ailleurs de manière extrêmement simple. En effet, les matelas 20, 22 ou 30, 32 dont l'épaisseur initiale est de l'ordre de 20 mm sont d'abord placés sur la surface extérieure du corps céramique 12 en laissant à l'extrémité de celui-ci, la place du joint d'étanchéité 24. Ce joint est ensuite mis en place autour du corps 12, puis l'ensemble est introduit dans l'une 26 des demi-coquilles destinée à former l'enveloppe 1. La seconde demi-coquille 28 est alors appliquée avec une pression de quelques tonnes sur le matelas opposé à la demi-coquille 26 et serrée jusqu'au moment où elle vient en contact avec cette demi-coquille, les matelas 20, 22 ou 30, 32 ayant alors une épaisseur de l'ordre de 4 à 5 mm. A ce moment, les coquilles 26 et 28 sont soudées l'une sur l'autre et le pot d'échappement forme un ensemble unitaire et cohérent prêt à être monté en place.

Bien que l'exemple de réalisation qui vient d'être décrit concerne un pot d'échappement ne comportant qu'un seul corps en céramique 12, il est bien évident qu'un pot d'échappement selon l'invention peut comporter plusieurs corps analogues montés dans la même enveloppe de façon à être traversés successivement par les gaz d'échappement et maintenus chacun par l'intermédiaire d'un matelas de fibres comprimé, en une seule ou en plusieurs parties, et un joint d'étanchéité 24 à leur extrémité la plus proche de la chambre de sortie des gaz.

## Revendications

1. Pot d'échappement catalytique comportant au moins un corps en céramique, de type nid d'abeille, enfermé à l'intérieur d'une enveloppe métallique (1) et délimitant avec celle-ci des chambres d'entrée et de sortie (16, 18) et, autour de chaque corps en céramique (12), un matelas (20, 22, 30, 32) de fibres très résistantes aux températures élevées, pratiquement dépourvu de liant, exempt d'eau de constitution, et fortement comprimé, caractérisé en ce que l'enveloppe métallique (1) étant formée par deux demi-coquilles (28) assemblées entre elles, le matelas (20, 22, 30, 32) est comprimé dans l'espace entre le corps en céramique (12) et l'enveloppe (1), délimite avec le corps et l'enveloppe la chambre d'entrée des gaz (16) mais est isolé de la chambre de sortie (18) par un joint d'étanchéité (24) entourant l'extrémité du corps en céramique et comprimé entre lui et l'enveloppe.

2. Pot d'échappement suivant la revendication 1, caractérisé en ce que le matelas (20, 22, 30, 32) est constitué par des fibres longues telles que des fibres composées à base de l'un au moins des éléments constitués par la magnésie, la chaux, la silice et l'alumine.

3. Pot d'échappement suivant l'une des revendications 1 et 2, caractérisé en ce que le matelas (20, 22) entoure la totalité de la surface du corps en matériau céramique (12).

4. Pot d'échappement suivant l'une des revendications 1 à 3, caractérisé en ce que le matelas comporte deux parties (20, 22 - 30, 32) qui recouvrent, chacune au moins la majeure partie de l'une des moitiés de la surface extérieure du corps en céramique (12).

5. Pot d'échappement suivant la revendication 4, caractérisé en ce que, l'enveloppe (1) ayant une section transversale elliptique, chaque partie du matelas (30, 32) s'étend sur l'une des surfaces de grand diamètre du corps (12) et sur seulement une portion des surfaces de petit diamètre adjacentes, un espace (34, 36) étant laissé libre entre les deux matelas.

6. Pot d'échappement suivant l'une des revendications 1 à 5, caractérisé en ce que le joint d'étanchéité (24) est constitué par un cordon de fibres à haute résistance aux températures qui est tressé serré.

7. Pot d'échappement suivant l'une des revendications 1 à 5, caractérisé en ce que le joint d'étanchéité (24) est une bande de matière thermoexpansible.

8. Pot d'échappement suivant l'une des revendications précédentes, caractérisé en ce que le matelas (20, 22, 30, 32) a une épaisseur de l'ordre de un quart ou un cinquième de son épaisseur initiale avant compression entre le corps (12) et l'enveloppe (1).

9. Pot d'échappement suivant l'une des revendications précédentes, caractérisé en ce que le matelas (20, 22, 30, 32) est constitué par des fibres résistant à une température supérieure à 1000°C ainsi qu'aux agents corrosifs en atmosphère oxydante ou réductrice.

**Patentansprüche**

1. Katalytische Auspuffanlage, die mindestens einen Körper aus Keramik des wabenförmigen Typs, der im Inneren eines Metallgehäuses (1) eingeschlossen ist und mit diesem die Eintritts- und Austrittskammern (16, 18) begrenzt, und um jeden Körper aus Keramik (12) herum eine Matte (20, 22, 30, 32) aus Fasern umfaßt, die sehr widerstandsfähig gegenüber erhöhten Temperaturen, praktisch ohne Bindemittel, frei von Konstitutionswasser und stark komprimiert sind, dadurch gekennzeichnet, daß das Metallgehäuse (1) von zwei Halbschalen (28) gebildet wird, die zusammengesetzt sind, die Matte (20, 22, 30, 32) in dem Raum zwischen dem Körper aus Keramik (12) und dem Gehäuse (1) zusammengedrückt ist und mit dem Körper und dem Gehäuse die Eintrittskammer der Gase (16) begrenzt, aber von der Austrittskammer (18) durch eine Dichtungsfuge (24) isoliert ist, welche das Ende des Körpers aus Keramik umgibt und zwischen diesem und dem Gehäuse zusammengedrückt ist.

2. Auspuffanlage gemäß Anspruch 1, dadurch gekennzeichnet, daß die Matte (20, 22, 30, 32) aus langen Fasern besteht, wie den Fasern, die auf Basis eines oder mehrerer der Bestandteile zusammengesetzt sind, welche aus Magnesiumoxid, Kalk, Siliciumoxid oder Aluminiumoxid bestehen.

3. Auspuffanlage gemäß einem der Ansprüche 1 und 2, dadurch gekennzeichnet, daß die Matte (20, 22) die Gesamtheit der Oberfläche des Körpers aus keramischem Material (12) umgibt.

4. Auspuffanlage gemäss einem der Ansprüche 1 bis 3, dadurch gekennzeichnet, daß die Matte zwei Teile (20, 22 - 30, 32) aufweist, welche jeder mindestens den Hauptteil der einen Hälfte der äußeren Oberfläche des Körpers aus Keramik (12) bedecken.

5. Auspuffanlage gemäß Anspruch 4, dadurch gekennzeichnet, daß das Gehäuse (1) eine elliptischen Querschnitt hat, sich jeder Teil der Matte (30, 32) über eine der Oberflächen des großen Durchmessers des Körpers (12) und nur einen Teil der benachbarten Oberflächen des kleinen Durchmessers erstreckt, wobei ein Raum (34, 36) zwischen den beiden Matten freigelassen wird.

6. Auspuffanlage gemäß einem der Ansprüche 1 bis 5, dadurch gekennzeichnet, daß die Dichtungsfuge (24) von einer Kordel aus Fasern einer hohen Temperatur-Widerstandsfähigkeit gebildet wird, die geflochten und gepreßt ist.

7. Auspuffanlage gemäß einem der Ansprüche 1 bis 5, dadurch gekennzeichnet, daß die Dichtungsfuge (24) ein Band aus wärmeexpandierbarem Material ist.

8. Auspuffanlage gemäß einem der vorhergehenden Ansprüche, dadurch gekennzeichnet, daß die Matte (20, 22, 30, 32) eine Dicke in der Größenordnung von einem Viertel oder einem Fünftel ihrer anfänglichen Dichte vor dem Zusammendrücken zwischen dem Körper (12) und dem Gehäuse (1) hat.

9. Auspuffanlage gemäß einem der vorhergehenden Ansprüche, dadurch gekennzeichnet, daß die Matte (20, 22, 30, 32) aus Fasern gebildet wird, die gegen eine Temperatur oberhalb 1000°C sowie gegenüber korrodierender Mitteln in oxidierender oder reduzierender Atmosphäre widerstandsfähig sind.

**Claims**

1. A catalytic exhaust muffler comprising at least one body made of a ceramic material of the honeycomb type, enclosed within a metallic casing (1) and delimiting therewith inlet and outlet chambers (16, 18) and round each ceramic body (12) a blanket (20, 22, 30, 32) of fibres very resistant to high temperatures, virtually devoid of a binder, without any constitutional, water and being highly compressed, characterized in that the metallic casing (1) being formed by two half-shells (28) fitted together, the blanket (20, 22, 30, 32) is compressed in the space between the ceramic body (12) and the casing (1) and delimits, together with the body and the casing, the inlet chamber (16) for the gases, but is isolated from the outlet chamber (18) by a sealing element (24) surrounding the end of the ceramic body and being compressed between it and the casing.

2. An exhaust muffler according to claim 1, characterized in that the blanket (20, 22, 30, 32) is constituted by long fibres such as compound fibres based on at least one of the elements constituted by magnesia, lime, silica and alumina.

3. An exhaust muffler according to one of claims 1 and 2, characterized in that the blanket (20, 22) surrounds the whole of the surface of the body (12) made of a ceramic material.

4. An exhaust muffler according to one of claims 1 to 3, characterized in that the blanket comprises two parts (20, 22 - 30, 32) which each cover at least the major portion of one of the halves of the external surface of the ceramic body (12).

5. An exhaust muffler according to claim 4, characterized in that since the casing (1) has an elliptical cross-section, each part (30, 32) extends over one of the surfaces with the large diameter of the body (12) and over only a portion of the adjacent surfaces with the small diameter, a space (34, 36) being left free between the two blankets.

6. An exhaust muffler according to one of claims 1 to 5, characterized in that the sealing element (24) is constituted by a cord of fibers having a high temperatures resistance, which cord is tightly braided.

7. An exhaust muffler according to one of claims 1 to 5, characterized in that the sealing element (24) is a strip of thermo-expansible material.

8. An exhaust muffler according to one of the preceding claims, characterized in that the blanket (20, 22, 30, 32) has a thickness of the order of a quarter, or a fifth of its initial thickness before compression between the body (12) and the casing (1).

9. An exhaust muffler according to one of the preceding claims, characterized in that the blanket (20, 22, 30, 32) is constituted by fibres withstanding a temperature exceeding 1000°C and resisting corrosive agents in an oxidizing or reducing atmosphere.

FIG.1

FIG.2

FIG.3

EP 0 210 103 B1